# EUROPÄISCHE PATENTSCHRIFT

(11) **EP 1 525 413 B1**
(45) Veröffentlichungstag und Bekanntmachung des Hinweises auf die Patenterteilung: **23.04.2014**
(21) Anmeldenummer: 03732385.4
(22) Anmeldetag: 15.05.2003
(51) Int. Cl.: F16H 57/02, F16H 1/14

(54) **KEGELRADGETRIEBE, INSBESONDERE HYPOIDGETRIEBE**
BEVEL GEAR, IN PARTICULAR A HYPOID BEVEL GEAR
ENGRENAGE CONIQUE ET NOTAMMENT HYPOIDE

(30) Priorität: 30.07.2002 DE 10234749
(43) Veröffentlichungstag der Anmeldung: 27.04.2005
(60) Teilanmeldung: 06012831.1
(73) Patentinhaber: Wittenstein AG, 97999 Igersheim (DE)
(72) Erfinder: MELBER, Karl-Georg, 97990 Weikersheim-Elpersheim (DE); ENGELBREIT, Michael, 97283 Riedenheim (DE)
(74) Vertreter: Zimmermann & Partner
(86) Internationale Anmeldenummer: PCT/EP2003/005098
(87) Internationale Veröffentlichungsnummer: WO 2004/015310

(56) Entgegenhaltungen:
- EP-A1- 0 557 961
- EP-A1- 1 326 032
- DE-A- 2 403 504
- DE-A- 19 957 743
- DE-A1- 10 013 785
- DE-A1- 19 957 743
- DE-C1- 19 733 546
- JP-A- 2001 323 967
- US-A- 4 319 499
- US-A- 5 816 116
- "ADVERTISEMENT" MACHINE DESIGN, PENTON,INC. CLEVELAND, US, Bd. 65, Nr. 15, 23. Juli 1993 (1993-07-23), Seite 38 XP000385065 ISSN: 0024-9114

## Beschreibung

Die Erfindung betrifft ein Hypoidgetriebe nach dem Oberbegriff des Anspruchs 1.

In diesem Zusammenhang wird auf die EP 1 326 032 A1 hingewiesen, welche ein Modulsystem von verschiedenen kombinierbaren Abtriebsarten offenbart und die Merkmale des Oberbegriffs des Anspruchs 1 enthält.

Weiter wird auf die DE 199 57 743 A1 hingewiesen, welche ein Winkelgetriebe offenbart, bei dem die Herstellung dadurch vereinfacht wird, dass Teile des Gehäuses aus einem Strangpressprofil hergestellt werden.

Ausserdem wird auf die JP 2011323967 hingewiesen, welche ebenfalls verschiedene Kombinationsmöglichkeiten von Antrieben offenbart.

Derartige Hypoidgetriebe sind in vielfältiger Form und Ausführung auf dem Markt bekannt und gebräuchlich. Sie dienen insbesondere zur Drehmomentenumlenkung von beispielsweise 90°, wobei auch andere Bereiche der Umlenkung im Rahmen der vorliegenden Erfindung liegen sollen.

Nachteilig ist bei herkömmlichen Getrieben, dass diese für unterschiedliche kundenspezifische Wünsche jeweils neu konzipiert und ausgelegt werden müssen. Insbesondere sind kundenspezifische Wünsche beispielsweise unterschiedliche Antriebsmuffen, Antriebswellen, unterschiedliche Übersetzungen, unterschiedliche Aufnahme für Abtriebselemente od. dgl.

Aufgrund der kundenspezifischen Vielfalt werden herkömmliche Hypoidgetriebe in unterschiedlichsten Varianten hergestellt. Dies ist fertigungstechnisch sehr teuer und aufwendig.

Die DE 199 57 743 A offenbart ein Winkelgetriebe, bei welcher eine Antriebswelle ein Kegelrad aufsitzt, welches eine lotrecht dazu angeordnete Hohlwelle antreibt.

Aus der DE 24 03 504 A ist ein Kegelradgetriebe bekannt, bei welchem zwei Wellen senkrecht zueinander in einer gemeinsamen Ebene angeordnet sind und den Wellen jeweils Kegelräder aufsitzen, die miteinander in Eingriff stehen.

Aus der US 5,816,116 ist ein Hypoidgetriebe beschreiben, aus welchem spezielle Flanschanordnungen zur Aufhängung des Winkelgetriebes vorgesehen sind.

Die Veröffentlichung aus der Zeitschrift Machine Design vom 23.07.1993, Band 65, Nr. 15, Seite 38, ISSN: 00249114 offenbart ein Winkelgetriebe, wobei innerhalb des Winkelgetriebes eine in einem Flansch gelagerte Welle vorgesehen ist, welcher ein Kegelrad aufsitzt. Dieses kämmt ein Kegelrad einer Abtriebswelle.

Die DE 24 03 504 zeigt ein Kegelradgetriebe, welches in einem Gehäuse Kegelräder enthält, deren Achsen senkrecht zueinander sind. Dazu weisen die Bauteile als Verbindungsstelle mit anderen Wellen-Stirnflächen senkrecht zu den Stirnflächen verlaufende Bohrungen auf, über die die einzelnen Bauteile zueinander fixierbar sind.

Die US 4 319 499 A beschreibt eine Schmiervorrichtung für eine letzte Getriebestufe einer Leistungsübertragungseinheit, welche ein Hypoidgetriebe mit einer in einem Gehäuse gelagerten Antriebswelle umfasst. Der Antriebswelle ist ein Kegelrad zugeordnet, welches mit einem Antriebskegelrad zusammenwirkt. Die Schmiervorrichtung umfasst eine Schmierhöhlung in einer senkrechten Trennwand zum Schmieren eines Kronenrads.

Der vorliegenden Erfindung liegt die Aufgabe zugrunde, ein Hypoidgetriebe zu schaffen, welches die genannten Nachteile beseitigt und mit welchem auf sehr kostengünstige und einfache Weise mit Standardbauteilen das Getriebe ausgeführt werden kann, an welches kundenspezifisch Abtriebselemente oder Antriebselemente modular anschliessbar sind. Hierdurch sollen die Fertigungskosten gesenkt werden, wobei gleichzeitig die Flexibilität des Hypoidgetriebes erhöht werden soll.

Zur Lösung dieser Aufgabe führen die Merkmale des Patentanspruches 1.

Bei der vorliegenden Erfindung ist besonders vorteilhaft, an die Hypoidstufe über einen Flansch ein ein- oder mehrstufiges Getriebe oder eine beliebige dimensionierte Antriebswelle modular anzuschliessen. Entsprechende kundenspezifische Dimensionierungen der Antriebswelle, beispielsweise hinsichtlich Durchmesser, Länge etc., welche vorzugsweise in einer Baugruppe untergebracht ist, können somit berücksichtigt werden, ohne dass die Hypoidstufe verändert werden muss. Hierzu ist lediglich erforderlich, dass die Baugruppe, die die Antriebswelle enthält, kundenspezifiziert werden muss, so dass das verbleibende Hypoidgetriebe für unterschiedliche Antriebswellen bzw. Baugruppen eingesetzt und verwendet werden kann.

Dabei lässt sich die Baugruppe, enthaltend die Antriebswelle, sehr schnell und leicht mit dem Hypoidgetriebe austauschen oder durch ein ein- oder mehrstufiges Getriebe ersetzen.

Dies hat auch den Vorteil, dass beispielsweise im Reparaturfall lediglich beispielsweise das ein- oder mehrstufige Getriebe von dem Hypoidgetriebe bzw. der Hypoidstufe abgeflanscht oder ausgetauscht werden muss, sollte dieses beispielsweise beschädigt sein. Zudem lässt sich kundenspezifisch ein Hypoidgetriebe realisieren, welches antriebsseitig und abtriebsseitg beliebige Möglichkeiten aufweist.

Ferner hat sich als vorteilhaft erwiesen, dass insbesondere die Baugruppe sowie das verbleibende Hypoidgetriebe in unterschiedliche Schmierräume unterteilt ist, so dass mit unterschiedlichen Schmiermitteln einerseits gearbeitet werden kann und andererseits ein Austausch der Baugruppen zwischen Hypoidgetriebe, beispielsweise ein ein- oder mehrstufiges Getriebe bzw. Antriebswelle jederzeit leicht und schnell möglich ist, ohne dass auf die Schmiermittel sowie deren Befüllzustände Rücksicht genommen werden muss.

Zudem hat sich als vorteilhaft bei der vorliegenden Erfindung erwiesen, die Abtriebswelle an zumindest einem stirnseitigen Bereich als Abtriebsflansch auszubilden, um unterschiedliche Abtriebselemente aufzunehmen. Zudem ist von Vorteil bei der vorliegenden Erfindung, dass beispielsweise direkt aus einem Teil der Abtriebswelle eine Schulter oder ein Absatz gebildet ist, um das Hauptlager aufzunehmen.

Gleichzeitig kann jedoch auch aus dem Kegelrad eine Schulter ausgebildet sein, um das Hauptlager der Abtriebswelle aufzunehmen.

Ein weiterer Vorteil bei der vorliegenden Erfindung ist, dass Kegelrad und Abtriebswelle zweiteilig, insbesondere wiederlösbar miteinander verbindbar ausgebildet sind, so dass eine Montage ggf. auch eine Reparatur wesentlich erleichtert ist. Zudem wird gewährleistet, dass eine äusserst geringe Baulänge durch diese Bauweise realisiert ist. Durch die zweiteilige Ausführung von Kegelrad und Abtriebswelle und durch die Lagerung des Hauptlagers auf der Schulter der Abtriebswelle können gleich gross dimensionierte Hauptlager verwendet und eingesetzt werden, so dass insgesamt die Stabilität und die Lebensdauer bei Reduktion oder Teilevielfalt optimiert ist. Dies soll ebenfalls im Rahmen der vorliegenden Erfindung liegen.

Ferner lässt sich bei der vorliegenden Erfindung ein Hypoidgetriebe realisieren, dessen Übersetzungsverhältnisse bei reduzierter Baulänge von beispielsweise 1 zu 10 wählbar ist, wobei dies auch erreicht werden kann, in dem der Hypoidstufe bzw. dem Hypoidgetriebe ein ein- oder mehrstufiges Getriebe vorgeschaltet ist. Dieses ist ebenfalls sehr leicht austauschbar.

Hierdurch können unterschiedliche kundenspezifische Hypoidgetriebe realisiert werden, die mit wenigen Veränderungen und Modifizierungen kundengerecht hergestellt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Längsschnitt durch ein nicht erfindungsgemäßes Kegelradgetriebe, insbesondere Hypoidgetriebe mit aufgesetztem ein- oder mehrstufigem Getriebe;
Figur 2 einen Teillängsschnitt durch ein Kegelradgetriebe als weiteres nicht erfindungsgemäßes Ausführungsbeispiel;
Figur 3 einen schematisch dargestellten Längsschnitt durch ein Ausführungsbeispiel eines Kegelradgetriebes.

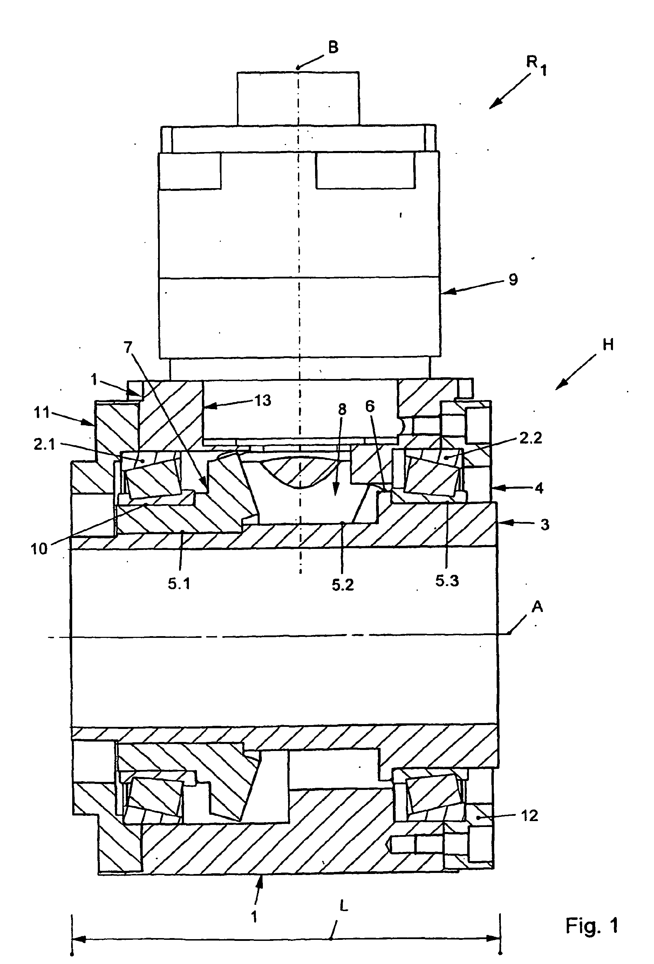

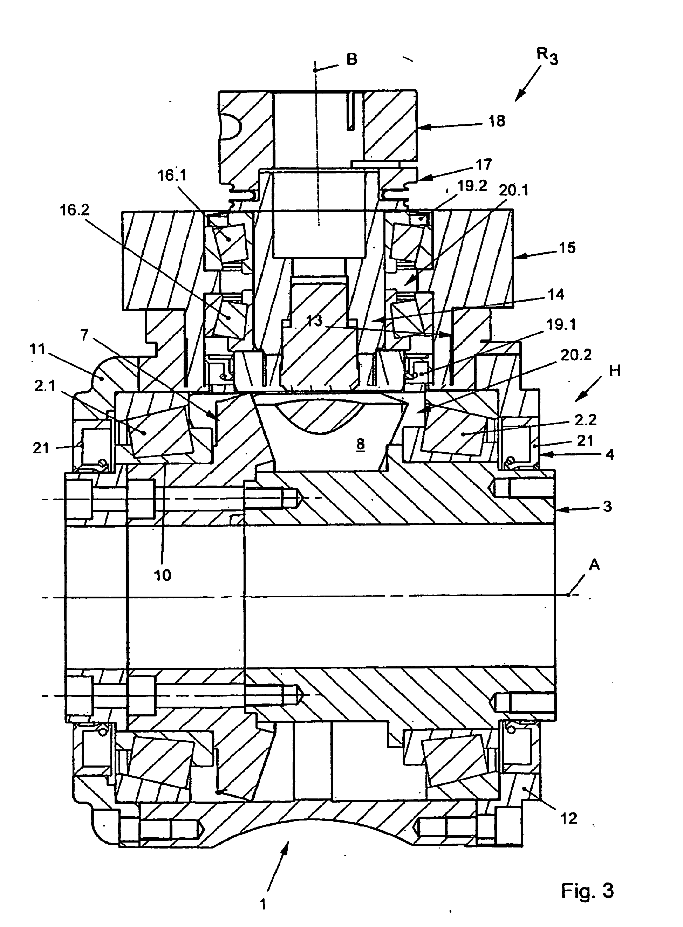

Gemäss den Figuren 1 und 3 weist ein Kegelradgetriebe R₁ ein Gehäuse 1 auf, in welchem zwei Hauptlager 2.1, 2.2 zueinander beabstandet jeweils in stirnseitigen Bereichen gelagert sind und innerhalb des Gehäuses 1 eine Durchgangsöffnung 4 vorgesehen ist, in welcher die Abtriebswelle 3 eingesetzt ist.

Die Abtriebswelle 3 ist mit einer Mehrzahl von unterschiedlichen Wellenabsätzen 5.1 bis 5.3 versehen. Zwischen den Wellenabsätzen 5.2 und 5.3 ist ein Anschlag 6 zur einseitigen Lagerung des Hauptlagers 2.2 vorgesehen. Auf dem Wellenabsatz 5.3 der Antriebswelle 3 sitzt das Hauptlager 2.2.

Auf dem Wellenabsatz 5.1 sitzt ein Kegelrad 7 verdrehfest der Abtriebswelle 3 auf. Über entsprechende Wellen-Nabenverbindungen, Keilwellenverbindungen oder durch Schrumpfsitze kann das Kegelrad 7 verdrehfest mit der Abtriebswelle 3 verbunden sein und lässt sich über ein entsprechendes Antriebskegelrad 8, welches hier nur angedeutet ist, antreiben und versetzt die Abtriebswelle 3 um die Achse A in eine Drehbewegung.

Das Antriebskegelrad 8 sitzt im vorliegenden Ausführungsbeispiel einem ein- oder mehrstufigen Getriebe 9 auf und ist über das Getriebe 9 um die Achse B verdrehbar gelagert.

Von Vorteil ist bei der vorliegenden Erfindung, um eine möglichst geringe Baulänge L zu erhalten, dass aus dem Kegelrad 7 eine Schulter 10 gebildet ist, auf welcher das Hauptlager 2.1 aufsitzt bzw. zwischen Schulter 10 und Gehäuse 1 das Hauptlager 2.1 eingesetzt ist und eine radiale und/oder axiale Lagerung der Abtriebswelle 3 gewährleistet. Zur axialen Sicherung des Hauptlagers 2.1 dient ein Abschlussdeckel 11 einends der Durchgangsöffnung 4 bzw. einends der Abtriebswelle 3.

Andernends im Bereich des Hauptlagers 2.2 ist ein Lagerdeckel 12 vorgesehen, der ebenfalls das Hauptlager 2.2 im Bereich des Gehäuses 1 axial sichert, wobei das Hauptlager 2.2 gegenüber dem Anschlag 6 auf dem Wellenabsatz 5.3 gehalten ist.

Auf diese Weise ist eine sehr einfache Montage bei äusserst geringer Baulänge L realisiert, so dass über die Hauptlager 2.1, 2.2 die Abtriebswelle 3 innerhalb des Gehäuses 1 axial eingespannt und radial verdrehbar gelagert ist. Durch die Zusammenlegung von Hauptlager 2.1 auf dem Kegelrad 7 ist ein Kegelradgetriebe realisiert, welches hohen Beanspruchungen standhält und gleichzeitig stark dimensionierte Hauptlager 2.1 und 2.2 bei reduzierter Baulänge L zulässt.

Zudem ist eine Montage, insbesondere Demontage beispielsweise bei Reparatur erleichtert, in dem lediglich Abschlussdeckel 11 sowie Lagerdeckel 12 stirnseitig des Gehäuses 1 entnommen werden müssen, um anschliessend die Hauptlager 2.1 bzw. 2.2 zu entnehmen bzw. abzuziehen, so dass dann die Abtriebswelle 3 mit oder ohne Kegelrad 7, je nach Verbindung aus der Durchgangsöffnung 4 entnommen werden kann.

Es ist auch denkbar, sollte lediglich das Kegelrad 7 ausgetauscht werden, dass durch Öffnen des Abschlussdeckels 11, Abziehen des Hauptlagers 2.1 sich das Kegelrad 7 vom Wellenabsatz 5.1 einfach abziehen lässt.

Ferner hat sich als vorteilhaft bei dem vorliegenden Ausführungsbeispiel erwiesen, dass der Hypoidstufe H des Kegelradgetriebes R₁ ein ein- oder mehrstufiges Getriebe 9 mit einem Flansch 13 mit ggf. Antriebskegelrad 8 schnell und wiederlösbar verbindbar ist, wobei auch daran gedacht sein kann, anstelle des Getriebes 9 in ein und denselben Flansch 13 eine beliebige Antriebswelle 14 mit ggf. Antriebskegelrad 8, siehe Figur 3, einzusetzen.

Dabei kann ein und derselbe Flansch 13 universell dazu dienen, das Getriebe 9 oder jede beliebige Antriebswelle 14 aufzunehmen, so dass auf diese Weise eine modulare Bauweise geschaffen ist. Es können anwenderspezifische unterschiedlich dimensionierte Antriebswellen 14 oder Getriebe 9 mit ggf. unterschiedlichen Übersetzungen eingesetzt werden. Dies soll ebenfalls im Rahmen der vorliegenden Erfindung liegen.

Ferner ist wichtig bei der vorliegenden Erfindung, dass, wie es insbesondere in dem Ausführungsbeispiel der vorliegenden Erfindung gemäss Figur 3 aufgezeigt ist, die Antriebswelle 14 eines Kegelradgetriebes R₃ beispielsweise als Baugruppe 15 in den Flansch 13 eingesteckt werden kann, wobei die Baugruppe 15 Lagerelemente 16.1, 16.2 aufweist, welche die Antriebswelle 14 lagern, an welche eine hier angedeutete Kupplung 17 mit Anschlussmuffe 18 für ein beliebiges Antriebselement anschliesst.

Ausserhalb der Lagerelemente 16.1, 16.2 sind Dichtelemente 19 vorgesehen, die die Baugruppe 15 zum Antriebskegelrad 8 sowie zur Kupplung 17 hin nach aussen abdichten, wobei ein erster Schmierraum 20.1 gebildet ist. Dieser Schmierraum 20.1 ist unabhängig von einem zweiten Schmierraum 20.2, der begrenzt wird über weitere Dichtelemente 21, zwischen Gehäuse 1 und Abtriebswelle 3 bzw. Kegelrad 7, insbesondere zwischen Abschlussdeckel 11 und Kegelrad 7 bzw. Abtriebswelle 3 und Lagerdeckel 12.

Auf diese Weise entstehen getrennte Schmierräume 20.1 und 20.2, so dass unterschiedliche Schmiermittel im Wirkbereich vom Kegelrad 7 und Antriebskegelrad 8 sowie im Bereich der Antriebswelle 14 verwendet werden können.

Zudem ist durch diese Anordnung lageunabhängig immer eine permanente Schmierung auch der Antriebswelle 14 gewährleistet. Zudem gewährleisten die separaten Schmierräume, dass mit unterschiedlichen Schmiermitteln, Schmierfetten oder unterschiedlichen Schmierölen die Antriebswelle 14 sowie Kegelrad 7 oder Antriebskegelrad 8 betrieben werden können.

Auf diese Weise können in den Schmierräumen 20.1, 20.2 auch unterschiedliche anwenderspezifische oder belastungsspezifische Schmiermittel eingesetzt werden.

Zudem ist von Vorteil, dass ein Austauschen der Baugruppe 15 vom Kegelradgetriebe R₁ bis R₃ sehr leicht und schnell ohne weiteres erfolgen kann.

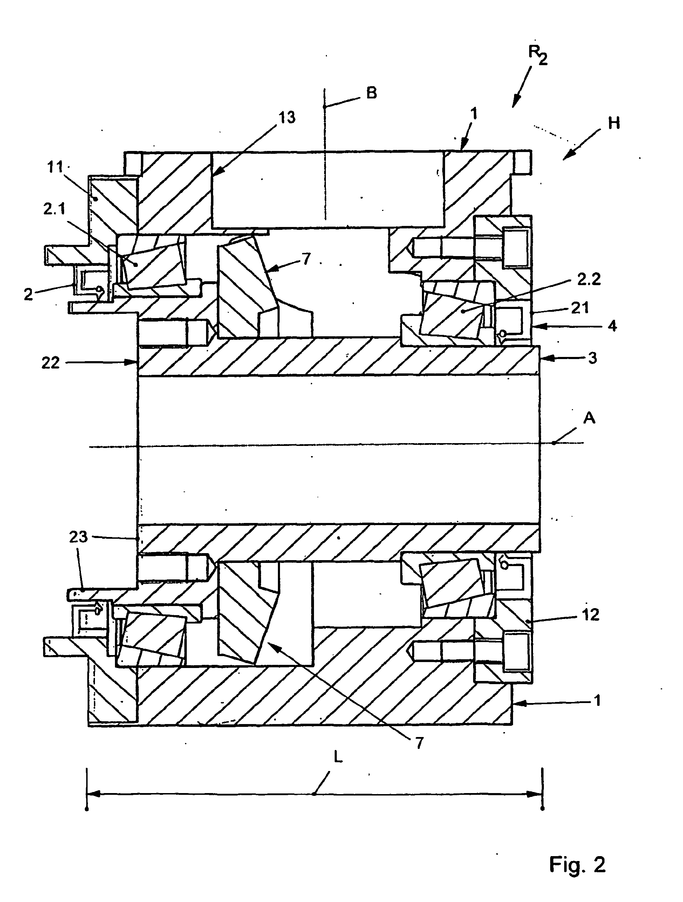

In dem Ausführungsbeispiel der vorliegenden Erfindung gemäss Figur 2 ist ein Kegelradgetriebe R₂ aufgezeigt, welches in etwa dem gemäss Figur 1 entspricht. Unterschiedlich ist, dass die Abtriebswelle 3 einen endseitigen Absatz aufweist, welchem das Hauptlager 2.1 aufsitzt. In einem stirnseitigen Bereich 22 ist die Abtriebswelle 3 als Abtriebsflansch 23 zum Montieren von beliebigen hier nicht dargestellten Antriebselementen ausgebildet. Dabei ist die Abtriebswelle 3 ebenfalls stufig unterteilt, um einerseits das Hauptlager 2.2 aufzuschieben und in einem mittleren Bereich das Kegelrad 7 formschlüssig oder kraftschlüssig mit der Abtriebswelle 3 zu verbinden.

Eine weitere Besonderheit der vorliegenden Erfindung liegt auch darin, dass der stirnseitige Bereich 22 des Abtriebsflansches 23 innerhalb des Abschlussdeckels 11 eingelassen ist, so dass insgesamt eine Baulänge L des Kegelradgetriebes R₂ reduziert ist. Zudem können beliebige Antriebselemente leicht und einfach angeflanscht werden.

In Figur 3 ist ein Kegelradgetriebe R₃ aufgezeigt, bei welchem Kegelrad 7 und Abtriebswelle 3 zweiteilig miteinander verbunden, insbesondere miteinander verschraubt sind. Um eine radiale Zentrierung zu gewährleisten, ist zwischen Kegelrad 7 und Abtriebswelle 3 stirnseitig ein ineinandergreifender Absatz gebildet. Durch die zweiteilige Ausführung ist eine Montage, Demontage, sowie eine Fertigung erleichtert.

## Patentansprüche

1. Hypoidgetriebe mit einer Hypoidstufe mit einer in einem Gehäuse (1) gelagerten Abtriebswelle (3), welcher ein Kegelrad (7) zugeordnet ist, welches mit einem Antriebskegelrad (8) zusammenwirkt, wobei der Hypoidstufe ein ein- oder mehrstufiges Getriebe (9) vorgeschaltet oder eine Antriebswelle (14) modular einsteckbar ist, wobei in ein und demselben zentralen Flansch (13) des Gehäuses (1) das ein- oder mehrstufige Getriebe (9) oder die Antriebswelle (14) modular einsteckbar ist, um das Kegelrad (7) der Abtriebswelle (3) zu kämmen, wobei das Kegelrad (7) und die Abtriebswelle (3) zweiteilig ausgeführt sind.
**dadurch gekennzeichnet, dass**
das Kegelrad (7) stirnseitig mit der Abtriebswelle (3) verbunden ist, wobei zumindest ein Absatz in dem Kegelrad (7) und in der Abtriebswelle (3) zur radialen Zentrierung vorgesehen ist.

2. Hypoidgetriebe nach Anspruch 1, **dadurch gekennzeichnet, dass** Abtriebswelle (3) und Kegelrad (7) zweiteilig miteinander verbindbar in einer Achse (A) angeordnet sind.

3. Hypoidgetriebe nach einem der Ansprüche 1 bis 2, **dadurch gekennzeichnet, dass** das Kegelrad (7) mit einer Schulter (10) versehen ist, welchem ein Hauptlager (2.1) der Abtriebswelle (3) aufsitzt und gegenüber dem Gehäuse (1) und ggf. einem Abschlussdeckel (11) abgestützt ist.

4. Hypoidgetriebe nach einem der Ansprüche 1 bis 2, **dadurch gekennzeichnet, dass** das Kegelrad (7) stirnseitig mit der Abtriebswelle (3) verschraubt.

5. Hypoidgetriebe nach Anspruch 4, **dadurch gekennzeichnet, dass** auf einer Schulter (10) des Kegelrades (7) das Hauptlager (2.1) abgestützt ist.

6. Hypoidgetriebe nach Anspruch 5, **dadurch gekennzeichnet, dass** das Kegelrad (7) verdrehfest auf die Abtriebswelle (3) aufgesteckt und zwischen der Schulter (10) des Kegelrades (7) und des Gehäuses (1) das Hauptlager (2.1) vorgesehen ist.

7. Hypoidgetriebe nach wenigstens einem der Ansprüche 1 bis 6, **dadurch gekennzeichnet, dass** die Abtriebswelle (3) stirnseitig einends als Abtriebsflansch (23) zum Adaptieren von beliebigen Abtriebselementen ausgebildet ist.

## Claims

1. A hypoid gear assembly with a hypoid stage with a driven shaft (3), which is mounted in a housing (1) and associated with which is a bevel gear (7), which cooperates with a bevel drive gear (8), wherein provided upstream of the hypoid stage is a single-or multi-stage gear system (9) or a drive shaft (14) is insertable in modular manner into the hypoid stage, wherein the single- or multi-stage gear system (9) or the drive shaft (14) are insertable in a modular manner into one and the same central flange (13) of the housing (1) in order to mesh with the bevel gear (7) of the driven shaft (3), wherein the bevel gear (7) and the driven shaft (3) are of two part construction, **characterised in that** the bevel gear (7) is connected at one end to the driven shaft (3), wherein at least one ledge is provided in the bevel gear (7) and in the driven shaft (3) for radial centering.

2. A hypoid gear system as claimed in claim 1, **characterised in that** the driven shaft (3) and bevel gear (7) are arranged in two parts to be connectable together in an axis (A).

3. A hypoid gear system as claimed in one of claims 1 to 2, **characterised in that** the bevel gear (7) is provided with a shoulder (10), on which a main bearing (2.1) of the driven shaft (3) rests and is supported with respect to the housing (1) and optionally an end plate (11).

4. A hypoid gear system as claimed in one of claims 1 to 2, **characterised in that** the bevel gear (7) is connected at its end to the drive shaft (3) by screws.

5. A hypoid gear system as claimed in claim 4, **characterised in that** the main bearing (2.1) is supported on a shoulder (10) on the bevel gear (7).

6. A hypoid gear system as claimed in claim 5, **characterised in that** the bevel gear (7) is rotatably fixedly attached to the driven shaft (3) and the main bearing (2.1) is provided between the shoulder (10) on the bevel gear (7) and the housing (1).

7. A hypoid gear system as claimed in at least one of the claims 1 to 6, **characterised in that** the driven shaft (3) is constructed at one end as a driven flange (23) for adapting any desired driven elements.

## Revendications

1. Engrenage hypoïde avec un étage hypoïde avec un arbre de sortie (3) monté dans un boîtier (1), auquel est associé un pignon conique (7) qui coopère avec un pignon d'entraînement (8), un engrenage à un ou plusieurs étages (9) étant connecté avant l'étage hypoïde ou un arbre d'entraînement (14) pouvant être introduit de manière modulaire dans ce dernier, dans une même bride centrale (13) du boîtier (1) pouvant être introduit de manière modulaire l'engrenage à un ou plusieurs étages (9) ou l'arbre d'entraînement (14), pour engrener le pignon conique (7) de l'arbre de sortie (3), le pignon conique (7) et l'arbre de sortie (3) étant réalisés en deux parties,
**caractérisé par le fait que**
le pignon conique (7) est relié du côté frontal à l'arbre de sortie (3), au moins un épaulement dans le pignon conique (7) et l'arbre de sortie (3) étant prévu pour le centrage radial.

2. Engrenage hypoïde selon la revendication 1, **caractérisé par le fait que** l'arbre de sortie (3) et le pignon conique (7) sont disposés dans un axe (A) de manière à pouvoir être connectés en deux parties l'un à l'autre.

3. Engrenage hypoïde selon l'une des revendications 1 à 2, **caractérisé par le fait que** le pignon conique (7) est pourvu d'un épaulement (10) sur lequel se trouve un palier principal (2.1) de l'arbre de sortie (3) et qui s'appuie contre le boîtier (1) et éventuellement un couvercle de fermeture (11).

4. Engrenage hypoïde selon l'une des revendications 1 à 2, **caractérisé par le fait que** le pignon conique (7) est, du côté frontal, assemblé par vissage avec l'arbre de sortie (3).

5. Engrenage hypoïde selon la revendication 4, **caractérisé par le fait que** sur un épaulement (10) du pignon conique (7) s'appuie le palier principal (2.1).

6. Engrenage hypoïde selon la revendication 5, **caractérisé par le fait que** le pignon conique (7) est engagé fixe en rotation sur l'arbre de sortie (3) et qu'entre l'épaulement (10) du pignon conique (7) et le boîtier (1) est prévu le palier principal (2.1).

7. Engrenage hypoïde selon au l'une des revendications 1 à 6, **caractérisé par le fait que** l'arbre de sortie (3) est réalisé du côté frontal à une extrémité sous forme de bride de sortie (23) pour adapter des éléments de sortie à volonté.
